# FASCICULE DE BREVET EUROPEEN

(11) **EP 0 558 387 B1**
(45) Date de publication et mention de la délivrance du brevet: **08.01.1997**
(21) Numéro de dépôt: 93400429.2
(22) Date de dépôt: 18.02.1993
(51) Int. Cl.: B01D 9/00

(54) **Perfectionnement aux appareils de cristallisation par évaporation**
Verbesserungen an Einrichtungen für Kristallisation durch Verdampfung
Improvements in apparatuses for crystallization by evaporation

(30) Priorité: 26.02.1992 FR 9202248
(43) Date de publication de la demande: 01.09.1993
(73) Titulaire: F C B, 93107 Montreuil Cédex (FR)
(72) Inventeur: Giorgi, Jean-Claude, F-59100 Roubaix (FR)
(74) Mandataire: Fontanié, Etienne

(56) Documents cités:
- DE-A- 375 612
- DE-A- 703 148
- GB-A- 342 942

## Description

La présente invention concerne les appareils de cristallisation par évaporation destinés à la production de cristaux d'un corps soluble à partir d'une solution de ce corps. Ces appareils sont notamment utilisés en sucrerie et raffinerie de sucre.

L'invention a plus particulièrement pour objet un appareil de cristallisation comportant, à l'intérieur d'une cuve fermée, généralement cylindrique et à axe vertical, un faisceau d'éléments chauffants constitués par des corps annulaires à parois creuses disposés verticalement et concentriquement dans la partie inférieure de la cuve de façon à ménager un puits central et de telle sorte que leurs bords supérieurs soient situés à des niveaux décroissants de la périphérie vers le centre du faisceau.

Le document DE-C-375612 décrit un appareil ainsi conçu qui est utilisé comme évaporateur et dans lequel la solution à traiter circule de l'entrée à la sortie de l'appareil sous l'action d'une pompe extérieure.

Le but de la présente invention est de permettre l'utilisation d'un appareil tel que décrit ci-dessus comme appareil de cristallisation en assurant la circulation en circuit fermé du produit en cours de cristallisation, de réduire les pertes de charge de ce circuit et d'améliorer les échanges thermiques entre le produit en cours de cristallisation et les éléments chauffants.

L'appareil de cristallisation, objet de l'invention, est caractérisé en ce qu'un agitateur est placé en bas du puits central pour accélérer la circulation descendante de la masse en cours de cristallisation dans le puits, et en ce que la dénivellation h entre le bord supérieur de l'élément chauffant extérieur et celui de l'élément chauffant intérieur est comprise entre 0,2 D^{2/3} et D^{2/3}, D étant le diamètre du puits central du faisceau et D et h étant exprimés en mètres.

Cette construction permet d'éviter une baisse du niveau de la masse en cours de cristallisation dans le puits central pouvant aller jusqu'à la vidange complète du puits, au début de l'opération, lorsque la hauteur de la masse en cours de cristallisation au-dessus du faisceau est faible, et de disposer, pendant cette période, d'une surface chauffante maximale.

Pour diminuer le coût de fabrication de l'appareil, il est avantageux d'utiliser des éléments chauffants ayant tous la même hauteur. Les bords inférieurs de ces éléments se situent alors à des niveaux décroissant de l'extérieur vers l'intérieur. Par un choix judicieux du profil du bas du faisceau et de la pente du fond de la cuve, il est possible d'optimiser l'écoulement sous le faisceau de la masse en cours de cristallisation.

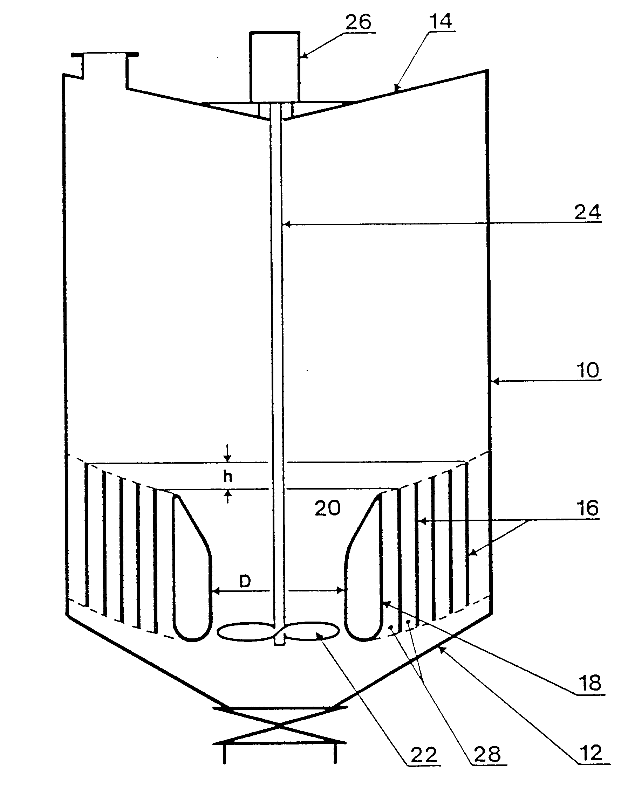

La description qui suit se réfère au dessin l'accompagnant qui montre, à titre d'exemple non limitatif, une forme de réalisation de l'invention.

L'unique figure de ce dessin est une représentation schématique, en coupe verticale, d'un appareil de cristallisation conforme à l'invention.

Cet appareil est constitué par une cuve cylindrique 10, à axe vertical, fermée par un fond tronconique 12 et un couvercle 14. Un faisceau d'éléments chauffants 16 est placé dans la partie inférieure de la cuve. Les éléments chauffants sont constitués par des corps annulaires, à parois creuses, de diamètres différents, disposés concentriquement et dont l'axe commun est confondu avec l'axe de la cuve. Ils sont raccordés, par des tuyauteries non représentées, à une alimentation en vapeur; des moyens d'évacuation des condensats et d'extraction des gaz incondensables sont également prévus. Ces moyens sont classiques et bien connus des spécialistes.

Les bords supérieurs des éléments chauffants 16 sont situés à des niveaux qui décroissent de la périphérie vers le centre du faisceau. La dénivellation h, exprimée en mètres, entre le bord supérieur de l'élément chauffant extérieur, de plus grand diamètre, et celui de l'élément chauffant intérieur, de plus petit diamètre, est comprise entre 0,2 D^{2/3} et D^{2/3}, D étant le diamètre du puits central 20 du faisceau exprimé en mètres. Le profil en coupe du haut du faisceau peut être constitué par deux segments de droite symétriques ou par deux arcs d'une courbe quelconque, symétrique par rapport à l'axe du faisceau, comme représenté sur la figure.

Dans l'exemple représenté, tous les éléments 16 ont la même hauteur, de sorte que le profil en coupe du bas du faisceau est le même que celui du haut. Les éléments chauffants pourraient avoir des hauteurs différentes et les profils du haut et du bas du faisceau seraient alors différents. Dans tous les cas, le profil du bas du faisceau et la pente du fond 12 de la cuve pourront être choisis pour optimiser l'écoulement de la masse en cours de cristallisation sous le faisceau.

Un caisson creux 18, à section annulaire, est placé au centre du faisceau, coaxialement à celui-ci. Ses extrémités qui se trouvent approximativement au même niveau que les extrémités respectives de l'élément chauffant intérieur, ou légèrement au-dessous, sont profilées pour améliorer l'écoulement de la masse en cours de cristallisation à l'entrée et à la sortie du puits central 20.

Son épaisseur (distance radiale entre ses parois intérieure et extérieure) est nettement supérieure à celle des éléments chauffants 16. Par exemple, les éléments chauffants pourront avoir une épaisseur de 50mm et le caisson une épaisseur de 300 mm.

Ce caisson peut être raccordé, comme les éléments chauffants, à une tuyauterie d'alimentation en vapeur et à des tuyauteries d'évacuation des condensats et d'extraction des gaz incondensables. La dénivellation h sera alors comptée entre le bord supérieur de l'élément chauffant extérieur et celui du caisson 18.

Un agitateur à hélice 22 monté à l'extrémité inférieure d'un arbre vertical 24 entraîné par un moteur 26 est placé à la sortie du puits central.

L'appareil décrit ci-dessus peut être utilisé, en particulier, pour la cristallisation du sucre, soit comme une chaudière à cuire à marche discontinue, soit comme élément d'un appareil à marche continue.

En cours de cristallisation, la liqueur-mère et les cristaux circulent de bas en haut entre les éléments chauffants puis redescendent sous le faisceau par le puits central. Ce mouvement qui est engendré par l'ébullition produite par la chaleur cédée par les éléments chauffants est accélérée par l'agitateur 22. La forme particulière du haut du faisceau permet d'éviter que le puits central se vide, sous l'action de l'agitateur 22, lorsque la hauteur de masse en cours de cristallisation au-dessus du faisceau est faible, par exemple, au démarrage d'une cuite discontinue, tout en conduisant à un rapport par exemple, au démarrage d'une cuite discontinue, tout en conduisant à un rapport surface chauffante/volume de la masse en cours de cristallisation maximal.

En éloignant la sortie du puits central, où la vitesse de la masse en cours de cristallisation est maximale, de l'entrée des plus proches passages 28 entre éléments chauffants, le caisson 18 permet d'éviter que se crée à l'entrée de ces passages une dépression qui contrarierait le mouvement ascendant de la masse.

## Revendications

1. Appareil de cristallisation par évaporation comportant une cuve fermée, à axe vertical, un faisceau d'éléments chauffants constitués par des corps annulaires à parois creuses disposés verticalement et concentriquement dans la partie inférieure de la cuve de façon à ménager un puits central et de telle sorte que leurs bords supérieurs soient situés à des niveaux décroissant de la périphérie vers le centre du faisceau, caractérisé en ce qu'un agitateur (22) est placé en bas du puits central (20) pour accélérer la circulation descendante de la masse en cours de cristallisation dans le puits et en ce que la dénivellation h entre le bord supérieur de l'élément chauffant extérieur, de plus grand diamètre, et celui de l'élément chauffant intérieur, de plus petit diamètre, est comprise entre 0,2 D^{2/3} et D^{2/3}, D étant le diamètre du puits central et h et D étant exprimés en mètres.

2. Appareil selon la revendication 1, caractérisé en ce que le profil du bas du faisceau et la pente du fond (12) de la cuve sont choisis pour optimiser l'écoulement de la masse en cours de cristallisation sous le faisceau.

## Claims

1. Evaporation crystallizer comprising a vertical-axis closed vessel, a calandria of heating elements consisting of hollow-wall ring-shaped bodies arranged vertically and concentrically in the lower part of the vessel so as to provide a central downtake and in such a way that their upper edges are situated at decreasing levels from the periphery toward the centre of the calandria, characterized in that an agitator (22) is placed at the foot of the downtake (20) in order to speed up the downward circulation in the downtake of the mass in the process of being crystallized and in that the difference in level h between the top edge of the outer heating element, which has the largest diameter, and that of the inner heating element, which has the smallest diameter, ranges between 0.2 D^{2/3} and D^{2/3}, where D is the diameter of the central downtake and h and D are expressed in meters.

2. Apparatus according to claim 1, characterized in that the profile of the lower part of the calandria and the slope of the bottom (12) of the vessel are designed so as to optimize the flow of the mass in the progress of crystallization under the calandria.

## Patentansprüche

1. Verdampfungskristallisator bestehend aus einem geschlossenen Gefäß mit vertikaler Achse, einer Heizkammer mit Heizkörpern, die von ringförmigen hohlwandigen Körpern gebildet werden, die derart vertikal und konzentrisch im unteren Teil des Gefäßes angeordnet sind, daß ein zentrales Leitrohr gebildet wird und daß sich ihre Oberkanten auf vom Umfang zur Mitte der Heizkammer hin abnehmenden Höhen befinden, dadurch gekennzeichnet, daß unten am zentralen Leitrohr (20) ein Rührwerk (22) angeordnet ist, um das Abwärtsfließen der kristallisierenden Masse im Leitrohr zu beschleunigen, und daß der Höhenunterschied h zwischen der Oberkante des äußeren Heizkörpers mit dem größten Durchmesser und der des inneren Heizkörpers mit dem kleinsten Durchmesser zwischen 0,2 D^{2/3} und D^{2/3} liegt, wobei D der Durchmesser des zentralen Leitrohres ist und h und D in Metern ausgedruckt werden.

2. Apparat gemäß Anspruch 1, dadurch gekennzeichnet, daß das Profil des Heizkammerunterteils und die Neigung des Bodens (12) des Gefäßes gewählt werden, um die Strömung der kristallisierenden Masse unter der Heizkammer zu optimieren.
